# EUROPÄISCHE PATENTSCHRIFT

(11) **EP 2 122 047 B1**
(45) Veröffentlichungstag und Bekanntmachung des Hinweises auf die Patenterteilung: **12.08.2015**
(21) Anmeldenummer: 07819263.0
(22) Anmeldetag: 24.10.2007
(51) Int. Cl.: D21B 1/32, D21B 1/34

(54) **STOFFLÖSER ZUR ZERKLEINERUNG UND SUSPENDIERUNG VON PAPIERSTOFF SOWIE SEINE VERWENDUNG**
PULPER FOR COMMINUTING AND SUSPENDING PAPERMAKING MATERIAL, AND ITS USE
TRITURATEUR POUR PULVÉRISER ET METTRE EN SUSPENSION DE LA PÂTE À PAPIER, ET SON UTILISATION

(30) Priorität: 12.12.2006 DE 102006000514
(43) Veröffentlichungstag der Anmeldung: 25.11.2009
(73) Patentinhaber: Voith Patent GmbH, 89522 Heidenheim (DE)
(72) Erfinder: MUELLER, Wolfgang, 88250 Weingarten (DE); STEIDELE, Andreas, 88213 Ravensburg (DE); GOTTSCHALK, Gert, 88212 Ravensburg (DE); REINHOLD, Roland, 88213 Ravensburg (DE)
(86) Internationale Anmeldenummer: PCT/EP2007/009204
(87) Internationale Veröffentlichungsnummer: WO 2008/071255

(56) Entgegenhaltungen:
- DE-B- 1 122 361
- DE-C- 844 116
- US-A1- 2006 273 208

## Beschreibung

Die Erfindung betrifft einen Stofflöser zur Zerkleinerung und Suspendierung von Papierstoff gemäß dem Oberbegriff des Anspruchs 1 sowie seine Verwendung.

Stofflöser dieser Art werden hauptsächlich angewendet, um lufttrockenes Zellstoffmaterial oder Altpapier in Suspension zu bringen. Das eingetragene Material wird in großen Stücken, Bahnen oder gepressten Ballen mit Wasser intensiv vermischt, wozu in der Regel ein Misch- und Zerkleinerungsrotor eingesetzt wird. Ein Stofflöser besteht im Wesentlichen aus einem Behälter für die Suspension und dem schon genannten Rotor. In vielen Fällen enthält er auch ein Sieb im Bodenbereich, durch das die Suspension abgepumpt werden kann.

Verständlicherweise werden solche Stofflöser ständig optimiert, wobei im Wesentlichen eine schnelle und kraftwirtschaftliche Auflösung angestrebt wird. Als Standardtyp für einen Stofflöser hat sich ein senkrecht stehender zylindrischer Behälter mit einem Rotor im Bodenbereich durchgesetzt. In diesem Behälter wird Wasser und der aufzulösende Stoff von oben zugegeben und mit Hilfe des Rotors eine Trombenströmung in der Suspension erzeugt, bei der also im zentralen Bereich der Stoff vom Rotor nach unten angesaugt und im Bodenbereich radial nach außen gedrückt wird, wodurch sich eine Umtriebsströmung ergibt. Es sind auch Strömungsmaßnahmen bekannt, um diese Umtriebsströmung zu steuern. So wird z.B. durch entsprechende Strömungseinbauten (Strombrecher) an der Behälterwand die Umfangsströmung gebremst, da diese nur einen geringen Beitrag zur Auflösung bringt. Die Förderung des eigentlichen Umtriebs, d.h. der wiederholte Transport des aufzulösenden Stoffes in den Rotorbereich bringt dagegen eine Verbesserung des Effektes. Auch wird angestrebt, den frisch eingetragenen Stoff möglichst schnell in die Suspension einzuziehen. Aus diesen Gründen ist auch schon viel Entwicklung an den Rotoren und Behältern der Stofflöser betrieben worden.

In der DE 19701129 A1 ist vorgeschlagen worden, den Behälter des Stofflösers eckig zu gestalten, um den Stoffeinzug zu verbessern. Eine weitere Verbesserung sollte die asymmetrische Anordnung des Rotors bewirken. Dieser Stofflöser fand jedoch keine größere Anwendung.

Einen anderen Versuch, Stofflöser dieser Art zu verbessern, zeigt die DE 36 38 993 C2. Demnach wird die Strömung der Suspension mit Hilfe eines seitlich angebrachten Rotors erzeugt. Auch die Schrägstellung der Rotorachse wurde schon durchgeführt, z.B. bei einem in der DE 32 24 705 A1 gezeigten Stofflöser, bei dem ein relativ hoch gebauter Rotor einen spitzen Winkel gegen die Vertikale einnimmt.

Stofflöser mit exzentrisch angeordneten Rotor, zylindrischer Seiten wird und kegelstumpfförmigem Boden, der eine Scheibe beinhaltet sind aus US 2006/0273208 A1, DE 1122361 und DE 844116 bekannt. Zur Verbesserung des Umtriebes sind auch schon unkonventionelle Wege beschritten worden, wie z.B. gemäß DE 34 29 514 C2, eine Mehrzahl von aufwändigen Rotoren innerhalb desselben Stofflöserbehälters.

Der Erfindung liegt die Aufgabe zu Grunde, die bekannten Stofflöser ohne wesentlichen Mehraufwand zu verbessern, wobei insbesondere der Einzug des Materials verbessert werden soll. Der Stofflöser soll schneller und/oder wirtschaftlicher auflösen können.

Diese Aufgabe wird durch die im Anspruch 1 beschriebenen Merkmale gelöst.

Es hat sich nämlich gezeigt, dass durch die besondere Form des Behälters und die Anordnung des Rotors ein schnellerer Einzug des eingetragenen Papierstoffes und eine Verbesserung des Umtriebes möglich ist. Der gesamte Auflösevorgang läuft schneller ab, was eine bessere Maschinennutzung sowie eine Energieersparnis bewirkt. Der verbesserte Auflöseeffekt lässt sich durch die schnellere Abnahme des Stippengehaltes in der Fasersuspension feststellen.

Die Erfindung wird erläutert an Hand von Zeichnungen. Dabei zeigen:
- Figur 1:: Schematisch einen Schnitt durch einen erfindungsgemäßen Stofflöser, Seitenansicht;
- Figur 2:: Stofflöser der Fig. 1, Ansicht von oben;
- Figur 3:: Eine Skizze zur Beschickung des Stofflösers bei der kontinuierlicher Auflösung;
- Figur 4:: Eine Skizze zur Beschickung des Stofflösers bei der diskontinuierlichen Auflösung;
- Figur 5:: Eine Skizze zur Zopfsituation.

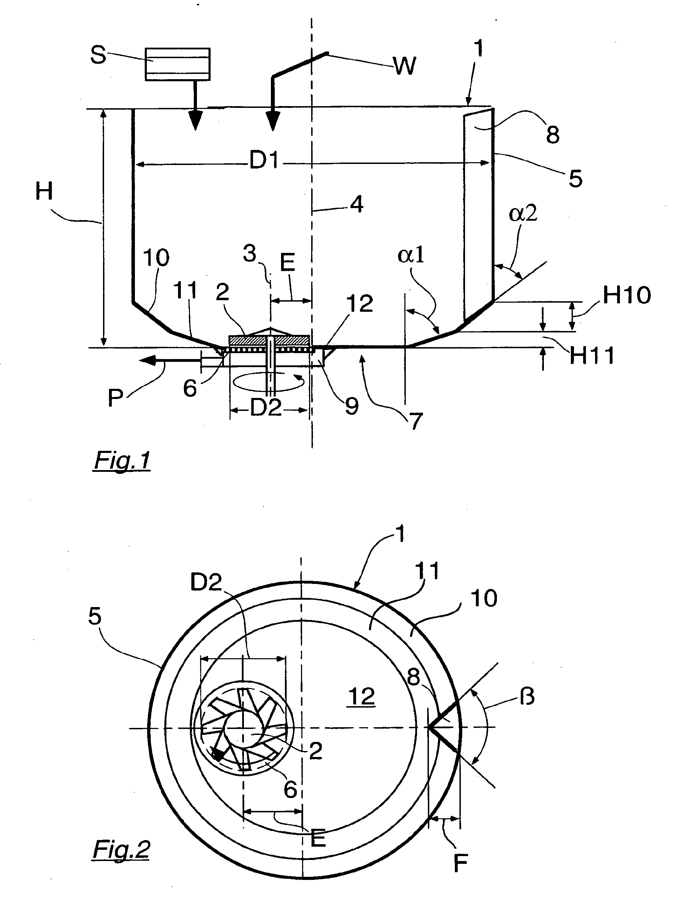

Der geschnitten in Seitenansicht gezeichnete Stofflöser der Fig. 1 ist eine typische Form der Erfindung. Der Papierstoff S wird zusammen mit Wasser W in einen oben offenen Behälter 1 eingegeben. Bei Betrieb des Stofflösers befindet sich im Behälter 1 eine Mischung aus Wasser und Papierstoff, welcher teilweise schon zerkleinert ist. Diese also mit groben und feinen Feststoffen versehene Suspension wird durch den im Bodenbereich des Behälters 1 angeordneten Rotor 2 in Umtrieb versetzt. Der Rotor wird durch einen nicht gezeigten Motor angetrieben. Wesentlich für diesen erfindungsgemäßen Stofflöser ist, dass die Mittellinie 3 des Rotors 2 gegenüber der senkrechten Mittellinie 4 des Behälters 1 seitlich versetzt angeordnet ist. Die Exzentrizität E dieses Versatzes ist bei einem zylindrischen Behälter 1, vorzugsweise 5 bis 20 % des Durchmessers D1 des Behälters 1.

Die Suspension wird vom Rotor 2 nach unten gezogen, wodurch etwa längs der Mittellinie 3 des Rotors 2 eine abwärts gerichtete Strömung entsteht. In Folge der Pumpwirkung des Rotors wird die Suspension am Boden des Behälters 1 radial nach außen gefördert und gelangt dadurch zu dessen Seitenwand 5. Insgesamt entsteht dadurch eine Zirkulationsströmung. Wie an sich bekannt, wird bei diesem beschriebenen Auflösevorgang durch hydraulische Kräfte und durch Kontakt zwischen Rotor 2 und Papierstoff die Zerkleinerung und Suspendierung des Papierstoffs bewirkt. Papierstoffteile, die genügend zerkleinert sind, können - wie hier gezeigt - durch ein Siebblech 6 hindurch in eine Kammer 9 gelangen und als faserstoffhaltige Suspension P abgeführt werden. Ein solcher Stofflöser kann sowohl kontinuierlich als auch diskontinuierlich betrieben werden. Das Siebblech 6 ist nicht unbedingt erforderlich. Der übliche Feststoffanteil in der Suspension P beträgt in der Regel um die 3 bis 6 %, ist aber nicht darauf beschränkt.

Die exzentrische Rotoranordnung entfaltet ihre günstige Wirkung besonders vorteilhaft, wenn der Boden 7 des Behälters 1 - außerhalb des Siebbereiches - einen Kegelstumpf oder mehrere miteinander verbundene Kegelstümpfe 10 und 11 aufweist, deren größter sich mit seinem größten Durchmesser an der Seitenwand 5 des Behälters anschließt und die so angeordnet sind, dass ihre Innendurchmesser von oben nach unten kleiner werden. Auf diese Weise wird also die Kontur des Stofflösers mit Hilfe mehrerer konischer Teile, die sich nach unten hin verjüngen, mit einer den Behälter unten abschließenden waagerechten Scheibe 12 verbunden. Ein guter Kompromiss zwischen Aufwand und Wirkung ist die Ausführung mit insgesamt zwei Kegelstümpfen. Dann kann z.B. der obere Kegelstumpf 10 seinen kleinsten Durchmesser zwischen 70 % und 90 % und der untere Kegelstumpf zwischen 40 % und 60 % des Durchmessers D1 des Behälters 1 aufweisen, um eine besonders günstige Strömung im Stofflöser zu erhalten.

An der dem Rotor 2 gegenüber liegenden Innenseite der Seitenwand 5 des Behälters 1 befindet sich eine vertikale Strömungsbarriere 8, die in einer einfachen Ausführung als rechtwinkeliges Winkelprofil ausgebildet sein kann, das sich senkrecht vom Boden 7 des Behälters 1 bis über den sich im Betrieb ausbildenden Suspensionsspiegel erstreckt. Diese Strömungsbarriere 8 reicht mit einem Radialvorsprung F in den Trog hinein, der mindestens 5 %, vorzugsweise mindestens 10 %, des Durchmessers D1 des Behälters 1 beträgt.

Zur Veranschaulichung zeigt die Fig. 2 einen Stofflöser, der dem in Fig. 1 ähnlich ist, in Ansicht von oben. Dabei sind die Löcher des Siebblechs 6 nicht dargestellt. Die Strömungsbarriere 8 hat auf den Betrieb des Stofflösers einen wesentlichen Einfluss. Durch Anzahl und Position einer oder mehrerer Strömungsbarrieren können die speziellen Bedingungen, unter denen der Stofflöser arbeiten soll, berücksichtigt werden. Da der erfindungsgemäße Stofflöser grundsätzlich sowohl für die Auflösung von Frischzellstoff, als auch von Altpapier verwendet werden kann, ist es von Vorteil, die Ausgestaltung des Stofflösers auf den Verwendungszweck abzustimmen. So hat es sich z.B. gezeigt, dass Frischzellstoff, welcher in suspendierter Form eine wesentlich höhere Zähigkeit aufweist als Altpapier, mit dem erfindungsgemäßen Stofflöser gut aufgelöst werden kann, wenn die Seitenwand 5 keinerlei die Umfangsströmung bremsenden Barrieren aufweist.

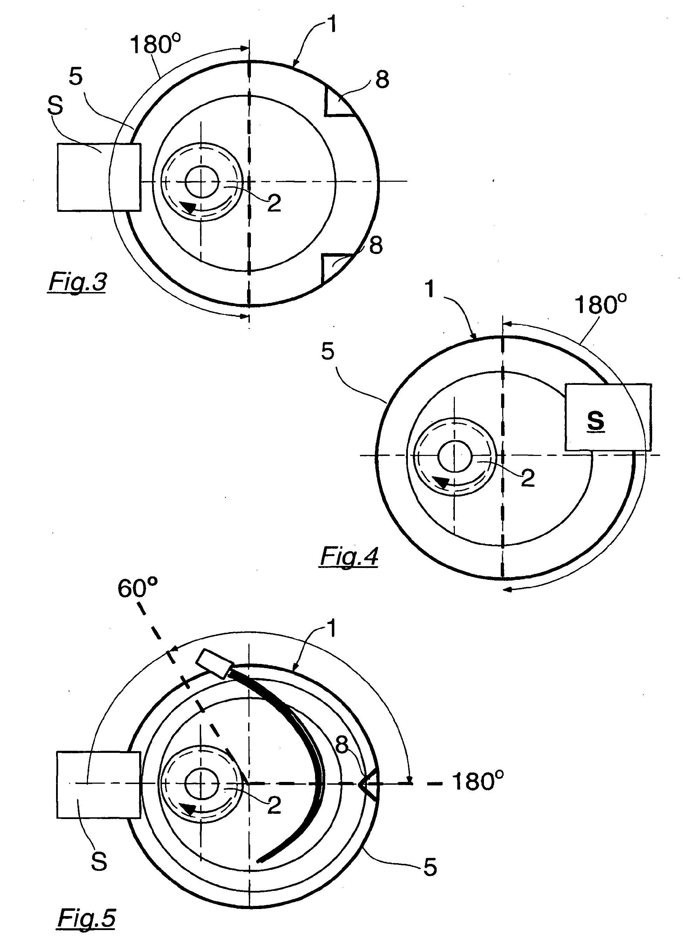

Darüber hinaus erfolgt der Eintrag in den Stofflöser mit Vorteil an verschiedenen Stellen, je nach dem, ob die Auflösung kontinuierlich oder diskontinuierlich erfolgen soll. So zeigt z.B. die Fig. 3 eine Verwendung des Stofflösers zur kontinuierlichen Auflösung von Altpapier, welches typischerweise mit Füllstoffen und eventuell Verunreinigung angereichert ist, darüber hinaus zumeist auch gemahlene Fasern enthält. Dabei wird der Papierstoff S in den 180°-Sektor des Stofflösers eingeworfen wird, in dessen Mitte sich der durch die Mitte des Rotors 2 verlaufende Radius des Behälters 1 befindet. Mit 180°-Sektor ist ein Teil des Stofflösers gemeint, der sich von oben betrachtet als Halbkreis darstellt. Bei einer diskontinuierlichen Auflösung z.B. von Frischzellstoff kann gemäß der Fig. 4 verfahren werden, bei der der Papierstoff S in den 180°-Sektor eingeworfen wird, der dem 180°-Sektor gegenüber liegt, in dessen Mitte sich der durch die Mitte des Rotors 2 verlaufende Radius des Behälters 1 befindet. Mit Vorteil wird also bei kontinuierlichem Betrieb der Papierstoff S auf der gegenüber liegenden Seite im Vergleich zur Auflösung bei diskontinuierlichem Betrieb eingeworfen.

Bei einer typischen Verwendung des erfindungsgemäßen Stofflösers wird aus dessen Trog ein Zopf herausgezogen. Die Technik des Zopfens ist seit langem bekannt, sie nutzt die Eigenschaft von Ballendrähten und größeren Verunreinigungen (Plastikfolien), sich in Folge der Rotationsströmung an einem Zopf anzulegen, sich also mit diesem zu verspinnen. Der Zopf wird über eine Zopfaustragsvorrichtung zumeist automatisch herausgezogen. Gerade bei Zopfbetrieb weist der erfindungsgemäße Stofflöser wesentliche Vorteile auf, da die Exzentrizität des Rotors 2, insbesondere in Verbindung mit einem mehrere Doppelkegel aufweisenden Boden 7 besonders günstige Verhältnisse für den Zopf schafft. So kann nämlich dem Zopf im Stofflöser Platz geschaffen werden, damit er sich möglichst lang ausbilden kann, ohne in den Bereich des Rotors zu geraten. Bekanntlich besteht durch Berührung des Zopfes mit dem Rotor die Gefahr, dass ein Teil des Zopfes abgeschlagen wird und den Bodenbereich des Stofflösers verstopft. Wie Fig. 5 zeigt, kann dieser Vorteil dadurch realisiert werden, dass eine Zopfvorrichtung verwendet wird, die den Zopf aus einem Teil des Behälters 1 herauszieht, der außerhalb des 60°-Sektors liegt, der sich in Drehrichtung des Rotors 2 gesehen nach der Mitte des Rotors 2 befindet. Besonders günstig ist es, wenn dieser Teil des Behälters in einem Sektor zwischen 90° und 300°, vorzugsweise 90° bis 180°, hinter dem (in Drehrichtung) durch die Rotormitte verlaufendem Behälterradius 13 liegt.

Insbesondere bei kontinuierlichem Auflösebetrieb ist es im Allgemeinen von Vorteil, wenn der Zopf aus einem Teil des Behälters (1) herausgezogen wird, der in einem Sektor zwischen 90° und 300°, vorzugsweise 90° bis 180°, nach der Einwurfstelle für den Papierstoff (S) liegt, in Drehrichtung des Rotors (2) gesehen.

Ein erfindungsgemäßer Stofflöser kann z.B. mit folgenden Maßen versehen sein. Der Behälter 1 dieses Stofflösers hat eine Troghöhe H von 2500 mm und eine zylindrische Seitenwand 5, deren Durchmesser D1 = 3500 mm beträgt. Die Exzentritzität E liegt bei 10 % des Durchmessers D1, also ca. 350 mm. Der Rotor 2 hat an seinen bewegten Flügeln einen Außendurchmesser D2 von 1100 mm. Er läuft dicht über einem ebenen kreisringförmigen Sieb 6, dessen Öffnungen er von Verstopfungen frei hält. Der Boden 7 des Stofflösers ist mit 2 Kegelstümpfen versehen. Auf der von der Mittellinie des Rotors 2 am meisten entfernten Seite der Seitenwand 5 ist eine Strömungsbarriere 8 angebracht, und zwar in Form eines rechtwinkeligen Winkelprofils, das sich vom Boden 7 bis etwa zum oberen Rand des Behälters 1 senkrecht erstreckt und mit einem Radialvorsprung F = 400 mm in den Behälter hineinragt. Auch wenn dieses Beispiel sich als besonders günstige Ausführungsform erwiesen hat, sind auch andere Fälle, insbesondere größere Stofflöser, vorstellbar, mit denen sich die Erfindung mindestens ebenso gut realisieren lässt.

## Patentansprüche

1. Stofflöser zur Zerkleinerung und Suspendierung von Papierstoff (S) mit einem eine Seitenwand (5) und einen Boden (7) aufweisenden Behälter (1), in dem der Papierstoff (S) mit Wasser (W) vermischt, zerkleinert und suspendiert werden kann, so dass eine papierstoffhaltige Suspension (P) gebildet wird,
wobei sich am Boden (7) des Behälters (1) ein angetriebener Rotor (2) zur Erzeugung einer Zirkulationsströmung im Behälter (1) befindet, die Mitte des Rotors (2) exzentrisch zur Mitte des Behälters (1) angeordnet ist der Behälter (1) eine im Wesentlichen zylindrische Seitenwand (5) und der Boden (7) mehrere miteinander verbundene Kegelstümpfe (10, 11), aufweist, deren größter sich mit seinem größten Durchmesser an der Seitenwand (5) des Behälters (1) anschließt und die so angeordnet sind, dass ihre Innendurchmesser von oben nach unten kleiner werden und der untere Kegelstumpf (11) an seinem kleineren Querschnitt mit einer Scheibe (12) verbunden ist, die den Behälter (1) unten abschließt, wobei der kleinste Durchmesser des unteren Kegelstumpfes zwischen 40 und 60 % des Durchmessers (D1) des Behälters (1) entspricht.

2. Stofflöser nach Anspruch 1,
**dadurch gekennzeichnet,**
**dass** die Mittellinie (3) des Rotors (2) vertikal ist.

3. Stofflöser nach Anspruch 1 oder 2,
**dadurch gekennzeichnet,**
**dass** die Mittellinie (4) der zylindrischen Seitenwand (5) senkrecht steht.

4. Stofflöser nach Anspruch 1, 2 oder 3,
**dadurch gekennzeichnet,**
**dass** die Exzentrizität (E), mit der der Rotor (2) zur Mitte des Behälters (1) steht, zwischen 5 % und 20 % des Durchmessers (D1) des Behälters (1) ist.

5. Stofflöser nach einem der vorhergehenden Ansprüche,
**dadurch gekennzeichnet,**
**dass** der Kegelstumpf oder die Kegelstümpfe (10, 11) konzentrisch mit der zylindrischen Seitenwand (5) sind.

6. Stofflöser nach einem der vorhergehenden Ansprüche,
**dadurch gekennzeichnet,**
**dass** der untere Kegelstumpf (11) an seinem kleineren Querschnitt mit einer waagerechten Scheibe (12) verbunden ist, die den Behälter (1) unten abschließt.

7. Stofflöser nach einem der vorhergehenden Ansprüche,
**dadurch gekennzeichnet,**
**dass** genau zwei Kegelstümpfe(10, 11) vorhanden sind.

8. Stofflöser nach Anspruch 7,
**dadurch gekennzeichnet,**
**dass** der kleinste Durchmesser des oberen Kegelstumpfes zwischen 70 % und 90 % des Durchmessers (D1) des Behälters (1) entspricht.

9. Stofflöser nach einem der vorhergehenden Ansprüche,
**dadurch gekennzeichnet,**
**dass** die Summe der Höhen (H10, H11) der Kegelstümpfe (10, 11) 20 bis 60 % der Troghöhe (H) beträgt.

10. Stofflöser nach einem der vorhergehenden Ansprüche,
**dadurch gekennzeichnet,**
**dass** der untere Kegelstumpf (11) zur Mittellinie einen halben Kegelwinkel (α1) von mindestens 50°, vorzugsweise 70°, aufweist.

11. Stofflöser nach einem der vorhergehenden Ansprüche,
**dadurch gekennzeichnet,**
**dass** der oberste Kegelstumpf (10) zur Mittellinie einen halben Kegelwinkel (α 2) zwischen 30° und 60° aufweist, vorzugsweise 35° bis 45°.

12. Stofflöser nach einem der voran stehenden Ansprüche,
**dadurch gekennzeichnet,**
**dass** sich im Boden (7) des Behälters (1) ein ebenes ringförmiges horizontal und konzentrisch mit dem Rotor (2) angeordnetes Sieb (6) befindet, wobei sich unterhalb des Siebes (6) eine Kammer (9) zur Aufnahme und Abführung der im Behälter (1) gebildeten Suspension (P) befindet.

13. Stofflöser nach einem der voran stehenden Ansprüche,
**dadurch gekennzeichnet,**
**dass** der Durchmesser (D2) des Rotors (2) zwischen 15 und 50 % des Durchmessers (D1) des Behälters (1) beträgt.

14. Stofflöser nach einem der voran stehenden Ansprüche,
**dadurch gekennzeichnet,**
**dass** das Verhältnis zwischen Durchmesser (D1) und Troghöhe (H) des Behälters (1) zwischen 1 und 2,4, vorzugsweise 1,6 bis 2, beträgt.

15. Stofflöser nach einem der voran stehenden Ansprüche,
**dadurch gekennzeichnet,**
**dass** die Innenseite der Seitenwand (5) frei ist von die Umfangsströmung bremsenden radial nach innen vorstehenden Strömungsbarrieren.

16. Stofflöser nach einem der Ansprüche 1 bis 14,
**dadurch gekennzeichnet,**
**dass** an der Seitenwand (5) des Behälters (1) wenigstens eine vertikale Strömungsbarriere (8) eingesetzt ist.

17. Stofflöser nach Anspruch 16,
**dadurch gekennzeichnet,**
**dass** die Strömungsbarriere (8) mit einem Radialvorsprung (F) in den Behälter (1) hineinreicht, der mindestens 5 %, vorzugsweise mindestens 10 %, insbesondere mindestens 20% des Durchmessers (D1) des Behälters (1) beträgt.

18. Stofflöser nach Anspruch 16 oder 17,
**dadurch gekennzeichnet,**
**dass** sich eine Strömungsbarriere (8) oder mehrere Strömungsbarrieren (8) in dem 180°-Sektor des Behälters (1) befinden, der vom Rotor am weitesten entfernt ist.

19. Stofflöser nach Anspruch 18,
**dadurch gekennzeichnet,**
**dass** sich eine Strömungsbarriere (8) an der vom Rotor am weitesten entfernten Stelle des Behälters (1) befindet.

20. Stofflöser nach Anspruch 17, 18 oder 19,
**dadurch gekennzeichnet,**
**dass** nur eine Strömungsbarriere (8) mit diesen Abmessungen des Radialvorsprungs (F) vorhanden ist.

21. Stofflöser nach Anspruch 17, 18 oder 19,
**dadurch gekennzeichnet,**
**dass** genau zwei Strömungsbarrieren (8) mit diesen Abmessungen des Radialvorsprungs (F) vorhanden sind.

22. Stofflöser nach Anspruch 16, 17, 18, 19, 20 oder 21,
**dadurch gekennzeichnet,**
**dass** die Strömungsbarriere (8) aus einem senkrecht stehenden Winkelprofil besteht, dessen Schenkel mit der Seitenwand (5) verbunden sind.

23. Verwendung des Stofflösers nach einem der vorhergehenden Ansprüche zur kontinuierlichen Auflösung von Papierstoff (S), insbesondere Altpapier,
**dadurch gekennzeichnet,**
**dass** der Papierstoff (S) von oben in den 180°-Sektor des Behälters (1) eingeworfen wird, in dessen Mitte sich der durch die Mitte des Rotors (2) verlaufende Radius (13) des Behälters (1) befindet.

24. Verwendung des Stofflösers nach einem der vorhergehenden Ansprüche 1-22 zur diskontinuierlichen Auflösung von Papierstoff (S), insbesondere Zellstoff,
**dadurch gekennzeichnet,**
**dass** der Papierstoff (S) von oben in den 180°-Sektor des Behälters (1) eingeworfen wird, der dem 180° Sektor gegenüber liegt, in dessen Mitte sich der durch die Mitte des Rotors (2) verlaufende Radius (13) des Behälters (1) befindet.

25. Verwendung eines Stofflösers nach Anspruch 23 zur kontinuierlichen Auflösung von Papierstoff (S), insbesondere Altpapier, **dadurch gekennzeichnet,**
**dass** eine Zopfvorrichtung (15) verwendet wird, die den Zopf(14) aus einem Teil des Behälters (1) herauszieht, der außerhalb des 60°-Sektors (16) liegt, der sich in Drehrichtung des Rotors gesehen, nach der Mitte des Rotors (2) befindet.

26. Verwendung des Stofflösers nach Anspruch 25,
**dadurch gekennzeichnet,**
**dass** der Zopf (14) aus einem Teil des Behälters (1) herausgezogen wird, der in einem Sektor zwischen 90° und 300°, vorzugsweise 90° bis 180°, nach dem in Drehrichtung durch die Rotormitte verlaufenden Radius (13) des Behälters (1) liegt.

27. Verwendung des Stofflösers nach Anspruch 25 oder 26,
**dadurch gekennzeichnet,**
**dass** der Zopf (14) aus einem Teil des Behälters (1) herausgezogen wird, der in einem Sektor zwischen 90° und 300°, vorzugsweise 90° bis 180°, nach der
Einwurfstelle für den Papierstoff (S) liegt, in Drehrichtung des Rotors (2) gesehen.

28. Verwendung des Stofflösers nach einem der Ansprüche 16 bis 22,
zur Auflösung von Altpapier.

29. Verwendung des Stofflösers nach Anspruch 15,
zur Auflösung von Frischzellstoff.

## Claims

1. Pulper for comminuting and suspending paper stock (S), having a container (1) having a side wall (5) and a bottom (7), in which the paper stock (S) can be mixed with water (W), comminuted and suspended, so that a suspension (P) containing paper stock is formed,
there being at the bottom (7) of the container (1) a driven rotor (2) for producing a circulating flow in the container (1), the centre of the rotor (2) being arranged eccentrically with respect to the centre of the container (1) the container (1) having a substantially cylindrical side wall (5) and the bottom (7) having a plurality of truncated cones (10, 11) joined to one another, of which the largest adjoins the side wall (5) of the container (1) with its largest diameter and which are arranged in such a way that their internal diameters become smaller from top to bottom and the lower truncated cone (11) being joined at its smaller cross section to a disc (12) which terminates the container (1) at the bottom, the smallest diameter of the lower truncated cone corresponding to between 40 and 60% of the diameter (D1) of the container (1).

2. Pulper according to Claim 1,
**characterized in that**
the centre line (3) of the rotor (2) is vertical.

3. Pulper according to Claim 1 or 2,
**characterized in that**
the centre line (4) of the cylindrical side wall (5) is vertical.

4. Pulper according to Claim 1, 2 or 3, **characterized in that**
the eccentricity (E) with which the rotor (2) stands with respect to the centre of the container (1) is between 5% and 20% of the diameter (D1) of the container (1).

5. Pulper according to one of the preceding claims, **characterized in that**
the truncated cone or the truncated cones (10, 11) are concentric with the cylindrical side wall (5).

6. Pulper according to one of the preceding claims, **characterized in that**
the lower truncated cone (11) is joined at its smaller cross section to a horizontal disc (12) which terminates the container (1) at the bottom.

7. Pulper according to one of the preceding claims, **characterized in that**
there are exactly two truncated cones (10, 11).

8. Pulper according to Claim 7,
**characterized in that**
the smallest diameter of the upper truncated cone corresponds to between 70% and 90% of the diameter (D1) of the container (1).

9. Pulper according to one of the preceding claims, **characterized in that**
the sum of the heights (H10, H11) of the truncated cones (10, 11) is 20 to 60% of the trough height (H).

10. Pulper according to one of the preceding claims, **characterized in that**
the lower truncated cone (11) has a half cone angle (α1) of at least 50°, preferably 70°, with respect to the centre line.

11. Pulper according to one of the preceding claims, **characterized in that**
the uppermost truncated cone (10) has a half cone angle (α2) of between 30° and 60°, preferably 35° to 45°, with respect to the centre line.

12. Pulper according to one of the preceding claims, **characterized in that**
in the bottom (7) of the container (1) there is a flat, annular screen (6) arranged horizontally and concentrically with the rotor (2), there being underneath the screen (6) a chamber (9) to hold and lead away the suspension (P) formed in the container (1).

13. Pulper according to one of the preceding claims, **characterized in that**
the diameter (D2) of the rotor (2) is between 15 and 50% of the diameter (D1) of the container (1).

14. Pulper according to one of the preceding claims, **characterized in that**
the ratio between diameter (D1) and trough height (H) of the container (1) is between 1 and 2.4, preferably 1.6 to 2.

15. Pulper according to one of the preceding claims, **characterized in that**
the inner side of the side wall (5) is free of flow barriers projecting radially inwards and braking the circumferential flow.

16. Pulper according to one of Claims 1 to 14, **characterized in that**
at least one vertical flow barrier (8) is used on the side wall (5) of the container (1).

17. Pulper according to Claim 16,
**characterized in that**
the flow barrier (8) reaches into the container (1) with a radial projection (F) that is at least 5%, preferably at least 10%, in particular at least 20%, of the diameter (D1) of the container (1).

18. Pulper according to Claim 16 or 17, **characterized in that**
there is a flow barrier (8) or a plurality of flow barriers (8) in the 180° sector of the container (1) which is furthest removed from the rotor.

19. Pulper according to Claim 18,
**characterized in that**
a flow barrier (8) is located at the point of the container (1) which is furthest removed from the rotor.

20. Pulper according to Claim 17, 18 or 19, **characterized in that**
there is only one flow barrier (8) with these dimensions of the radial projection (F).

21. Pulper according to Claim 17, 18 or 19, **characterized in that**
there are exactly two flow barriers (8) with these dimensions of the radial projection (F).

22. Pulper according to Claim 16, 17, 18, 19, 20 or 21,
**characterized in that**
the flow barriers (8) are composed of a vertically angled profile, the limbs of which are joined to the side wall (5).

23. Use of the pulper according to one of the preceding claims for the continuous pulping of paper stock (S), in particular waste paper, **characterized in that**
the paper stock (S) is thrown from above into the 180° sector of the container (1) in the centre of which the radius (13) of the container (1) extending through the centre of the rotor (2) is located.

24. Use of the pulper according to one of the preceding claims 1 - 22 for the discontinuous pulping of paper stock (S), in particular pulp, **characterized in that**
the paper stock is thrown from above into the 180° sector of the container (1) which lies opposite that 180° sector, in the centre of which the radius (13) of the container (1) extending through the centre of the rotor (2) is located.

25. Use of a pulper according to Claim 23 for the continuous pulping of paper stock (S), in particular waste paper,
**characterized in that**
use is made of a ragger device (15) which pulls the rope (14) out of a part of the container (1) which lies outside the 60° sector (16) which is located after the centre of the rotor (2), as seen in the direction of rotation of the rotor.

26. Use of the pulper according to Claim 25, **characterized in that**
the rope (14) is pulled out of a part of the container (1) which lies in a sector between 90° and 300°, preferably 90° to 180°, after - in the direction of rotation - the radius (13) of the container (1) extending through the centre of the rotor.

27. Use of the pulper according to Claim 25 or 26, **characterized in that**
the rope (14) is pulled out of a part of the container (1) which lies in a sector between 90° and 300°, preferably 90° to 180°, after the point at which the paper stock (S) is thrown in, as seen in the direction of rotation of the rotor (2).

28. Use of the pulper according to one of Claims 16 to 22 for the pulping of waste paper.

29. Use of the pulper according to Claim 15 for the pulping of fresh pulp.

## Revendications

1. Triturateur pour broyer et mettre en suspension de la pâte à papier (S) avec un récipient (1) présentant une paroi latérale (5) et un fond (7), dans lequel la pâte à papier (S) peut être mélangée avec de l'eau (W), broyée et mise en suspension, de telle manière qu'il se forme une suspension (P) contenant de la pâte à papier, dans lequel un rotor entraîné (2) se trouve sur le fond (7) du récipient (1) pour la production d'un courant de circulation dans le récipient (1), le milieu du rotor (2) est disposé de façon excentrique par rapport au milieu du récipient (1), le récipient (1) présente une paroi latérale (5) essentiellement cylindrique et le fond (7) présente plusieurs troncs de cône (10, 11) reliés l'un à l'autre, dont le plus grand se raccorde avec son plus grand diamètre à la paroi latérale (5) du récipient (1) et qui sont disposés de telle manière que leurs diamètres intérieurs diminuent du haut vers le bas et que le tronc de cône inférieur (11) soit assemblé avec sa plus petite section transversale à un disque (12), qui ferme le récipient (1) dans le bas, dans lequel le plus petit diamètre du tronc de cône inférieur (11) vaut entre 40 et 60 % du diamètre (D1) du récipient (1).

2. Triturateur selon la revendication 1, **caractérisé en ce que** l'axe central (3) du rotor (2) est vertical.

3. Triturateur selon la revendication 1 ou 2, **caractérisé en ce que** l'axe central (4) de la paroi latérale cylindrique (5) est vertical.

4. Triturateur selon la revendication 1, 2 ou 3, **caractérisé en ce que** l'excentricité (E), avec laquelle le rotor (2) est disposé par rapport au milieu du récipient (1), est comprise entre 5 % et 20 % du diamètre (D1) du récipient (1).

5. Triturateur selon l'une quelconque des revendications précédentes, **caractérisé en ce que** le tronc de cône ou les troncs de cône (10, 11) est/sont concentrique(s) à la paroi latérale cylindrique (5).

6. Triturateur selon l'une quelconque des revendications précédentes, **caractérisé en ce que** le tronc de cône inférieur (11) est assemblé à sa section transversale inférieure à un disque horizontal (12), qui ferme le récipient (1) dans le bas.

7. Triturateur selon l'une quelconque des revendications précédentes, **caractérisé en ce qu'**il se trouve exactement deux troncs de cône (10, 11).

8. Triturateur selon la revendication 7, **caractérisé en ce que** le plus petit diamètre du tronc de cône supérieur vaut entre 70 % et 90 % du diamètre (D1) du récipient (1).

9. Triturateur selon l'une quelconque des revendications précédentes, **caractérisé en ce que** la somme des hauteurs (H10, H11) des troncs de cône (10, 11) vaut 20 à 60 % de la hauteur du bac (H).

10. Triturateur selon l'une quelconque des revendications précédentes, **caractérisé en ce que** le tronc de cône inférieur (11) présente par rapport à l'axe central un demi-angle de cône (α1) d'au moins 50°, de préférence de 70°.

11. Triturateur selon l'une quelconque des revendications précédentes, **caractérisé en ce que** le tronc de cône supérieur (10) présente par rapport à l'axe central un demi-angle de cône (α2) compris entre 30° et 60°, de préférence entre 35° et 45°.

12. Triturateur selon l'une quelconque des revendications précédentes, **caractérisé en ce qu'**un tamis plan annulaire (6) disposé horizontalement et concentriquement au rotor (2) se trouve dans le fond (7) du récipient (1), dans lequel il se trouve en dessous du tamis (6) une chambre (9) destinée à contenir et évacuer la suspension (P) formée dans le récipient (1).

13. Triturateur selon l'une quelconque des revendications précédentes, **caractérisé en ce que** le diamètre (D2) du rotor (2) vaut entre 15 et 50 % du diamètre (D1) du récipient (1).

14. Triturateur selon l'une quelconque des revendications précédentes, **caractérisé en ce que** le rapport entre le diamètre (D1) et la hauteur du bac (H) du récipient (1) vaut entre 1 et 2,4, de préférence de 1,6 à 2.

15. Triturateur selon l'une quelconque des revendications précédentes, **caractérisé en ce que** le côté intérieur de la paroi latérale (5) est libre de barrières à l'écoulement saillantes radialement vers l'intérieur qui freinent l'écoulement en périphérie.

16. Triturateur selon l'une quelconque des revendications 1 à 14, **caractérisé en ce qu'**au moins une barrière à l'écoulement verticale (8) est introduite sur la paroi latérale (5) du récipient (1).

17. Triturateur selon la revendication 16, **caractérisé en ce que** la barrière à l'écoulement (8) pénètre dans le récipient (1) avec une saillie radiale (F), qui vaut au moins 5 %, de préférence au moins 10 %, en particulier au moins 20 % du diamètre (D1) du récipient (1).

18. Triturateur selon la revendication 16 ou 17, **caractérisé en ce qu'**il se trouve une barrière à l'écoulement (8) ou plusieurs barrières à l'écoulement (8) dans le secteur de 180° du récipient (1), qui est le plus éloigné du rotor.

19. Triturateur selon la revendication 18, **caractérisé en ce qu'**il se trouve une barrière à l'écoulement (8) à l'endroit du récipient (1) le plus éloigné du rotor.

20. Triturateur selon la revendication 17, 18 ou 19, **caractérisé en ce qu'**il ne se trouve qu'une seule barrière à l'écoulement (8) avec ces dimensions de la saillie radiale (F).

21. Triturateur selon la revendication 17, 18 ou 19, **caractérisé en ce qu'**il se trouve exactement deux barrières à l'écoulement (8) avec ces dimensions de la saillie radiale (F).

22. Triturateur selon la revendication 16, 17, 18, 19, 20 ou 21, **caractérisé en ce que** la barrière à l'écoulement (8) se compose d'une cornière placée verticalement, dont les ailes sont assemblées à la paroi latérale (5).

23. Utilisation du triturateur selon l'une quelconque des revendications précédentes pour la trituration continue de pâte à papier (S), **caractérisée en ce que** la pâte à papier (S) est déversée par le haut dans le secteur de 180° du récipient (1), au milieu duquel se trouve le rayon (13) du récipient (1) passant par le milieu du rotor (2).

24. Utilisation du triturateur selon l'une quelconque des revendications 1 à 22 pour la trituration discontinue de pâte à papier (S), en particulier de pâte de cellulose, **caractérisée en ce que** la pâte à papier (S) est déversée par le haut dans le secteur de 180° du récipient (1), qui est situé en face du secteur de 180° au milieu duquel se trouve le rayon (13) du récipient (1) passant par le milieu du rotor (2).

25. Utilisation d'un triturateur selon la revendication 23 pour la trituration continue de pâte à papier (S), en particulier de vieux papiers, **caractérisée en ce que** l'on utilise un dispositif de tortillage (15), qui tire la tresse (14) hors d'une partie du récipient (1), qui est située à l'extérieur du secteur de 60° qui, vu dans le sens de rotation du rotor, se trouve après le milieu du rotor (2).

26. Utilisation du triturateur selon la revendication 25, **caractérisée en ce que** la tresse (14) est tirée hors d'une partie du récipient (1), qui est située dans un secteur compris entre 90° et 300°, de préférence entre 90° et 180°, dans le sens de rotation après le rayon (13) du récipient (1) passant par le milieu du rotor.

27. Utilisation du triturateur selon la revendication 25 ou 26, **caractérisée en ce que** la tresse (14) est tirée hors d'une partie du récipient (1), qui est située dans un secteur compris entre 90° et 300°, de préférence entre 90° et 180°, après l'endroit de déversement pour la pâte à papier (S), vu dans le sens de rotation du rotor (2).

28. Utilisation du triturateur selon l'une quelconque des revendications 16 à 22, pour la trituration de vieux papiers.

29. Utilisation du triturateur selon la revendication 15, pour la trituration de pâte de cellulose fraîche.
